# EUROPÄISCHE PATENTSCHRIFT

(11) **EP 4 092 404 B1**
(45) Veröffentlichungstag und Bekanntmachung des Hinweises auf die Patenterteilung: **29.01.2025**
(21) Anmeldenummer: 22171870.3
(22) Anmeldetag: 05.05.2022
(51) Int. Cl.: G01N 21/25

(54) **MIKROPLATTEN-LESEGERÄT**
MICROPLATE READING DEVICE
LECTEUR DE MICRODISQUES

(30) Priorität: 19.05.2021 DE 102021112938
(43) Veröffentlichungstag der Anmeldung: 23.11.2022
(73) Patentinhaber: BMG Labtech GmbH, 77799 Ortenberg (DE)
(72) Erfinder: Herzog, Nils, 77654 Offenburg (DE)
(74) Vertreter: LBP Lemcke, Brommer & Partner Patentanwälte mbB

(56) Entgegenhaltungen:
- WO-A1-2013/181347
- DE-A1- 102015 214 414
- US-A1- 2004 256 963
- US-A1- 2016 123 886

## Beschreibung

Die vorliegende Erfindung betrifft ein Mikroplatten-Lesegerät umfassend ein Gehäuse, in dessen Inneren ein Probenbereich und ein Systembereich ausgebildet sind, wobei der Probenbereich eine Aufnahmevorrichtung zur Aufnahme einer Mikroplatte umfasst, die eine Vielzahl von Vertiefungen aufweist, wobei im Probenbereich und/oder im Systembereich ein optisches Element zur Erfassung einer optischen Strahlung an jeweils einzelnen der Vertiefung einer in der Aufnahmevorrichtung aufgenommenen Mikroplatte angeordnet ist, wobei die Aufnahmevorrichtung und das optische Element beweglich zueinander angeordnet sind, um die aufgenommene Mikroplatte bezüglich des optischen Elements für aufeinanderfolgende Messungen an unterschiedlichen Vertiefungen zu positionieren, und wobei der Systembereich zumindest ein Mess- und/oder Analysemodul für die optische Strahlung umfasst.

Bei einer Mikroplatte handelt es sich um einen Probenträger zur Durchführung photometrischer oder anderer Messungen, wobei der Probenträger eine Vielzahl von in regelmäßigen Abständen angeordnete Vertiefungen aufweist, in welchen die einzelnen Proben ausgebildet sind. Ein Mikroplatten-Lesegerät dient dabei zum "Auslesen" von Mikroplatten, indem an den einzelnen Vertiefungen, auch "Wells" genannt, photometrische Messungen durchgeführt werden. Hierzu besitzt das Mikroplatten-Lesegerät Mess- und Analysemodule, wie etwa einen Photomultiplier, mittels welchen die Lumineszenz, Fluoreszenz und/oder Absorption der Proben in den Vertiefungen ermittelt wird. Die Mikroplatte wird hierzu in eine Aufnahmevorrichtung eingesetzt, die über eine Positioniermechanik in X- und Y-Richtung beweglich ist. Zum sequenziellen Auslesen der einzelnen Vertiefungen werden diese nacheinander von der Positioniermechanik in den Erfassungsbereich des optischen Elements gebracht.

Die photometrische Untersuchung von Proben in einer Mikroplatte mit einem Mikroplatten-Lesegerät kommt in breiten Anwendungsfeldern zum Einsatz, unter anderem zum Erkennen von biologischen, chemischen, biochemischen oder physikalischen Reaktionen der Proben. Je nach Anwendungsfall können Zusatzfunktionen benötigt werden, um entsprechende Reaktionen auszulösen, zu unterhalten oder in sonstiger Weise zu unterstützen. Darüber hinaus können auch Messsensoren für zusätzliche Messfunktionen benötigt werden.

Zur Erzeugung bestimmter Testbedingungen für die Proben ist die Mikroplatte innerhalb des Mikroplatten-Lesegerätes in einem Probenbereich angeordnet, wobei die Mikroplatte bei Bedarf beheizt werden kann. Zudem kann das Mikroplatten-Lesegerät in seinem Inneren mit einem gasförmigen Medium versorgt werden, wobei es sich bei dem gasförmigen Medium bevorzugt nicht um Luft handelt. Hierdurch kann die bei bestimmten Anwendungen erforderliche Gas-Atmosphäre wie auch gleichbleibende Testbedingungen für die Analyse der Proben geschaffen werden.

Die Mess- und/oder Analysemodule zur Detektion der von den Proben ausgesendeten oder absorbierten optischen Strahlung sind vorwiegend in einem Systembereich angeordnet, welcher bevorzugt nächstmöglich an den Proben angeordnet ist. Allerdings hat sich gezeigt, dass die Messgenauigkeiten der Mess- und/oder Analysemodule erhöht werden können, wenn deren Komponenten gekühlt und die optischen Wege kurz gehalten werden können.

Es ist bereits bekannt, zur Kühlung des Mikroplatten-Lesegerätes und insbesondere des Probenbereichs unter Raumtemperatur dieses in einer entsprechenden Kühlkammer oder einem Klimaschrank zu platzieren und dort zu betreiben. Zum einen ist jedoch der Platzbedarf hierfür um ein Vielfaches gegenüber einem nicht gekühlten Mikroplatten-Lesegerät erhöht, zum anderen sind die Anschaffungskosten für die Kühlkammer und die laufenden Energiekosten sehr hoch.

Weiter ist es bekannt einzelne Komponenten der Mess- und/oder Analysemodule des Mikroplatten-Lesegerätes unmittelbar zu kühlen, insbesondere mittels Peltier-Elementen. Hierdurch können jedoch nur einzelne Komponenten gekühlt werden, wobei diese für eine effektive Kühlung zusätzlich gegenüber den anderen Komponenten isoliert werden müssen. Eine Kühlung des Probenbereichs unter Raumtemperatur wird jedoch nicht ermöglicht.

Die US 2016/0123886 A1 offenbart ein Fluoreszenz Abtastsystem mit einer Festkörper-Lichtquelle, einem Fluoreszenzmikroskop, einem Bewegungstisch und einem integrierten Computer zur Steuerung der vorgenannten Komponenten, wobei das System weiter einen stabilen Rahmen umfasst, in welchem in einem unteren Bereich der Computer, die Lichtquelle und das Mikroskop und in einem oberen Bereich der Bewegungstisch für die darauf anzuordnende Mikroplatte angeordnet sind. Im unteren Bereich sind zudem Lüftungsgitter auf einer Seite und auf der der Lüftungsgitter gegenüberliegenden Seite Ventilatoren zum Erzeugen einer Luftströmung über die Lüftungsgitter für eine Kühlung angeordnet.

Die DE 10 2015 214 414 A1 offenbart ein System zur Ermittlung von Eigenschaften von Proben, die in Vertiefungen einer Mikrotiterplatte angeordnet sind, wobei das System eine Messkammer zur Aufnahme der Mikrotiterplatten, eine Heizeinrichtung zum Heizen der Proben und eine Messeinrichtung zur Messung der von den Proben emittierten Strahlung umfasst.

Die US 2004/0256963 A1 offenbart ein automatisiertes System bei der Inkubation und Analyse mehrerer biologischer Proben für die Probenkristallisation, welches System einen temperaturgesteuerten Schrank mit Probelagerung, Probentransport und Probenanalysesystem umfasst, wobei die Umgebungsbedingungen in dem System durch das Leiten von Heiz- oder Kühlluft beeinflussbar sind. Es ist daher eine Aufgabe der vorliegenden Erfindung, ein Mikroplatten-Lesegerät anzugeben, mittels welchem eine effektive und kostengünstige Kühlung des Systembereichs, insbesondere unter Raumtemperatur, ermöglicht wird.

Es ist eine weitere Aufgabe der vorliegenden Erfindung, ein Mikroplatten-Lesegerät anzugeben, mittels welchem zudem auch eine einfache und schnelle Kühlung des Probenbereichs, insbesondere unter Raumtemperatur, ermöglicht wird. Diese und weitere Aufgaben werden gelöst durch ein Mikroplatten-Lesegerät mit den Merkmalen des Anspruchs 1. Weitere vorteilhafte Ausgestaltungen sind in den abhängigen Ansprüchen dargelegt. Erfindungsgemäß ist bei einem Mikroplatten-Lesegerät der eingangs genannten Art vorgesehen, dass im Systembereich eine Vorrichtung zur konvektiven Kühlung angeordnet ist, wobei zwischen dem Systembereich und dem Probenbereich zumindest ein Leitelement angeordnet ist um eine Strömung der konvektiven Kühlung, insbesondere im Systembereich, zu leiten, wobei das Leitelement zumindest eine Öffnung zum Probenbereich aufweist und/oder so angeordnet ist, um mit einer Komponente des Mikroplatten-Lesegerätes eine Öffnung auszubilden, und/oder dass mehrere Leitelemente abschnittsweise so angeordnet sind, um zwischen dem Systembereich und dem Probenbereich zumindest eine Öffnung auszubilden, so dass mittels der Kühlvorrichtung sowohl der Probenbereich als auch der Systembereich gekühlt werden können..

Durch das zumindest eine Leitelement zwischen dem Systembereich und dem Probenbereich kann die konvektive Kühlung, insbesondere im Systembereich, gezielt geleitet werden, sodass die Mess- und/oder Analysemodule im Systembereich optimal von der konvektiven Kühlung umströmt und entsprechend gekühlt werden.

Durch die Kühlung der Mess- und/oder Analysemodule wird während den Messungen die Messgenauigkeit verbessert, wobei durch das Leiten der Strömung der konvektiven Kühlung, insbesondere im Systembereich, mittels des zumindest einen Leitelements zunächst keine wesentliche Beeinflussung des Probenbereichs erfolgt.

Durch die Öffnung kann gezielt eine Beeinflussung des Probenbereichs mittels der im Systembereich angeordneten Kühlvorrichtung zur konvektiven Kühlung erfolgen, wobei durch entsprechende Anordnung des Leitelements bzw. der Leitelemente im Mikroplatten-Lesegerät und die Ausgestaltung der zumindest einen Öffnung zum Probenbereich der Einfluss der Kühlung auf den Probenbereich bestimmt werden kann. Somit können die thermischen Bedingungen im Probenbereich mittels einer Kühlvorrichtung im Systembereich beeinflusst und sogar eingestellt werden. Die im Systembereich angeordnete Kühlvorrichtung ermöglicht somit sowohl den Probenbereich als auch den Systembereich zu kühlen bzw. entsprechend zu temperieren.

Bei den Mess- und/oder Analysemodule handelt es sich insbesondere um einen optischen Detektor und/oder ein Anregungsmittel. Beispielsweise kann es sich bei den Mess- und/oder Analysemodulen um einen Photomultiplier, eine Blitzlampe oder eine Lichtquelle handeln.

Bei der Komponente des Mikroplatten-Lesegerätes handelt es sich insbesondere um ein Mess- und/oder Analysemodul, eine Trägerplatte, ein Verstärkungs- oder Versteifungselement oder eine elektronische Komponente, beispielsweise eine Platine.

Bei dem optischen Element handelt es sich insbesondere um ein verstellbares Objektiv, eine Linse, eine Blende und/oder einen Lichtwellenleiter.

In einer bevorzugten Ausführungsform ist im Probenbereich eine Heizeinrichtung zum Beheizen der Mikroplatte und insbesondere des optischen Elements angeordnet. Somit können die Mikroplatte wie auch das optische Element und auch optional weitere Elemente im Probenbereich gezielt beheizt werden, um beispielsweise entsprechende Reaktionen bei den Proben auszulösen, welche erst in einem bestimmten Temperaturbereich ablaufen. Durch die Heizeinrichtung kann die Mikroplatte, und insbesondere auch der gesamte Probenbereich, auf eine Temperatur von typischerweise bis zu 60 °C erwärmt werden. Bevorzugt umfasst die Heizeinrichtung eine untere Heizplatte und/oder eine obere Heizplatte, welche unterhalb und/oder oberhalb der Mikroplatte angeordnet sind. Insbesondere weist die obere Heizplatte eine Durchtrittsöffnung auf, durch welche die optische Strahlung ausgehend von den einzelnen Vertiefungen der Mikroplatte in Richtung des optischen Elements hindurchtreten kann.

Vorzugsweise weist das Gehäuse einen Gas-Einlass auf, über welchen das Gehäuse, insbesondere der Probenbereich und der Systembereich, vollständig mit einem gasförmigen Medium geflutet werden. Durch das gezielte Einbringen eines gasförmigen Mediums in das Gehäuse werden im Probenbereich die von bestimmten Anwendungen, zum Beispiel bei der Analyse von biologischen Zellen, benötigten Bedingungen geschaffen. Zudem kann eine ungewünschte oder unbeabsichtigte Reaktion der Proben in der Mikroplatte vermieden werden. Als gasförmiges Medium werden insbesondere Stickstoff und/oder Kohlenstoffdioxid verwendet. Vorzugsweise kann auch durch den Gas-Einlass ein bestimmtes Mischungsverhältnis, wie beispielsweise ein (Rest-) Sauerstoffgehalt, eingestellt sowie zeitliche Veränderungen des Gemischs im Gehäuse erreicht werden.

Eine bevorzugte Ausführungsform des Mikroplatten-Lesegerätes zeichnet aus, dass das zumindest eine Leitelement oder mehrere Leitelemente zusammen den Probenbereich im Wesentlichen überdecken. Durch das Überdecken des Probenbereichs wird der Probenbereich, in welchem die Proben auch beheizt werden können, im Wesentlichen von dem Systembereich abgeschirmt und getrennt. Somit können im Systembereich wie auch im Probenbereich unterschiedliche Bedingungen bestehen. Insbesondere kann der Probenbereich unabhängig von der Kühlung im Systembereich beheizt werden.

Alternativ oder vorzugsweise ergänzend ist im Bereich der zumindest einen Öffnung ein Lüfter, insbesondere ein Radiallüfter, angeordnet. Mittels des Lüfters kann gezielt das im Probenbereich befindliche gasförmige Medium in den Systembereich geleitet werden und so der Probenbereich auch mittels der im Systembereich angeordneten Kühlvorrichtung aktiv gekühlt werden. Dabei kann der Lüfter nur bei Bedarf eingeschaltet werden. Zudem kann durch den Lüfter gegenüber einer nur über die Konvektion zwischen Systembereich und Probenbereich ausgebildeten Kühlung diese schneller erfolgen. Die Verwendung eines Radiallüfter ermöglicht zudem durch dessen Bauform, dass dieser im ausgeschaltetem Zustand eine konvektive Kühlung zwischen dem Systembereich und dem Probenbereich im Wesentlichen unterbindet. Dadurch kann bei der Verwendung eines Radiallüfters auch auf ein Verschlusselement vor der entsprechenden Öffnung verzichtet werden.

Vorzugsweise umfasst das Mikroplatten-Lesegerät ein Verschlussmittel mit dem eine Öffnungsfläche der zumindest einen Öffnung veränderbar und insbesondere verschließbar ist. Durch die Veränderung der Öffnungsfläche kann gezielt eine Beeinflussung der thermischen Bedingungen im Probenbereich durch die konvektive Kühlung durch die Öffnung hindurch beeinflusst werden. Vorzugsweise ist das Verschlussmittel ein Schieber oder eine Klappe.

Somit kann der Probenbereich durch das Verschlusselement von dem Systembereich gezielt abgetrennt werden, sodass keine konvektive Kühlung über die zumindest eine Öffnung mehr stattfindet. Zudem kann durch das Verschlusselement die entsprechende Öffnungsfläche der Öffnung zwischen dem Systembereich und dem Probenbereich eingestellt werden und so die konvektive Kühlung zwischen dem Systembereich und dem Probenbereich entsprechend verändert werden.

In einer bevorzugten Ausführungsform beträgt die Öffnungsfläche bis zu 100 cm², bevorzugt bis zu 60 cm², besonders bevorzugt bis zu 40 cm², insbesondere 35 cm². Durch die geringe Öffnungsfläche im Vergleich zur Grundfläche des Mikroplatten-Lesegerätes, welche etwa im Bereich des 20-fachen bis 100-fachen der Öffnungsfläche liegt, wird ein beheizen des Probenraums ermöglicht ohne hierbei die Bedingungen im Systembereich wesentlich zu beeinflussen. Somit können die Bedingungen im Probenbereich wie auch im Systembereich gezielt und auch unterschiedlich ausgebildet werden. Weiter wird jedoch auch eine gezielte Beeinflussung des Probenbereichs durch die Kühlung ermöglicht.

Eine bevorzugte Ausführungsform des Mikroplatten-Lesegerätes zeichnet aus, dass das zumindest eine Leitelement zumindest zwei Öffnungen zum Probenbereich aufweist oder ausbildet, welche bevorzugt in unterschiedlichen Höhen über einem Boden des Gehäuses ausgebildet sind. Mittels zumindest zwei Öffnungen kann gezielt auch eine konvektive Kühlung aktiv mittels Unterstützung durch den vor einer Öffnung angeordneten Lüfter oder auch passiv im Probenbereich erzielt werden. Durch die Anordnung der Öffnungen in unterschiedlichen Höhen gegenüber einem Boden des Gehäuses des Mikroplatten-Lesegerätes wird dies weiter unterstützt. So kann an der näher am Boden angeordneten Öffnung eine Strömung aus dem Probenbereich in den Systembereich erfolgen, wohingegen bei der weiter vom Boden des Gehäuses entfernt angeordneten Öffnungen eine Strömung der konvektiven Kühlung aus dem Systembereich in den Probenbereich erfolgt. Insbesondere können hierdurch auch Strömungen im Probenbereich ausgebildet werden, welche es erlauben, dass im Probenbereich entstehende Lösungsmitteldämpfe, welche beispielsweise durch Verdampfen eines Lösungsmittels in den einzelnen Vertiefungen der Mikroplatte entstehen, aus dem Probenbereich in den Systembereich abgeführt werden können.

Vorzugsweise umfasst die Kühlvorrichtung einen Strömungsventilator, mittels welchem die konvektive Kühlung im Systembereich unterstützt wird. Der Strömungsventilator ist bevorzugt an einem Auslass der Kühlvorrichtung angeordnet.

Bevorzugt ist die Kühlvorrichtung im Systembereich derart platziert, um die Strömung der konvektiven Kühlung als einen Kreislauf, insbesondere im Systembereich, auszubilden. Durch die Ausbildung eines Kreislaufs wird die Strömung gezielt, insbesondere im Systembereich, geleitet und eine effektive Kühlung der Mess- und/oder Analysemodule im Systembereich ermöglicht.

In einer bevorzugten Ausführungsform weist die Kühlvorrichtung einen Auslass und einen Einlass auf, welche vorzugsweise so angeordnet sind, dass eine von der Kühlvorrichtung ausgehende gekühlte Strömung des Kreislaufs zu einer in die Kühlvorrichtung eingehenden erwärmten Strömung des Kreislaufs einen Winkel in einem Bereich von 60° bis 120°, bevorzugt von etwa 90° zueinander bilden. Somit kann der Kreislauf der Strömung der konvektiven Kühlung so durch den Systembereich geleitet werden, dass durch die spezielle Anordnung des Einlasses und des Auslasses eine Kreuzung der Strömung vermieden wird.

Alternativ oder vorzugsweise ergänzend sind das oder die Mess- und/oder Analysemodule, welche eine hohe Leistung aufweisen und eine entsprechende Wärme erzeugen und/oder eine hohe Temperaturstabilität benötigen und/oder gekühlt eine höhere Leistungsfähigkeit aufweisen, im Kreislauf der Strömung zuerst angeordnet. So kann einerseits hohe Temperaturstabilität bei den einzelnen Mess- und/oder Analysemodulen erzielt werden und/oder durch eine direkte Kühlung die Leistungsfähigkeit des einzelnen Mess- und/oder Analysemoduls gesteigert werden. Andererseits können durch die Anordnung der eine hohe Leistung aufweisenden Mess- und/oder Analysemodule zuerst in Kühlkreislauf und somit näher am Auslass der Kühlvorrichtung diese gezielt gekühlt und deren erzeugte Wärme entsprechend abgeführt werden. Hierdurch wird die Messgenauigkeit der Mess- und/oder Analysemodule insgesamt verbessert. Durch die gezielte Kühlung dieser Mess- und/oder Analysemodule wird insbesondere ein Wärmestau in bestimmten Bereichen im Systembereich vermieden. Weiter wird durch eine Anordnung dieser Mess- und/oder Analysemodul zuerst in Kühlkreislauf erreicht, dass die noch kühle Strömung eine höhere Wärmemenge aufnehmen kann und somit eine bessere Kühlung der Mess- und/oder Analysemodule ermöglicht wird.

Alternativ und/oder vorzugsweise ergänzend sind das oder die Mess- und/oder Analysemodule so angeordnet, um von der gekühlten Strömung unmittelbar angeströmt zu werden. Durch das direkte Anströmen der entsprechenden Mess- und/oder Analysemodule können diese gezielt gekühlt werden. Bei den direkt angeströmten Mess- und/oder Analysemodulen handelt es sich insbesondere um solche Mess- und/oder Analysemodule, welche eine hohe Leistung aufweisen und somit entsprechend Wärme erzeugen und/oder eine hohe Temperaturstabilität benötigen und/oder gekühlt eine höhere Leistungsfähigkeit aufweisen.

In einer bevorzugten Ausführungsform umfasst die Kühlvorrichtung einen Verdampfer sowie einen Kondensator und vorzugsweise einen Kühlventilator, wobei vorzugsweise der Verdampfer im Gehäuse und der Kondensator sowie der Kühlventilator außerhalb des Gehäuses, insbesondere am Gehäuse selbst, bevorzugt in einem Anbauelement, angeordnet sind. Durch die Anordnung des Kondensators und insbesondere des Kühlventilators außerhalb des Gehäuses, insbesondere außerhalb eines thermisch isolierten Gehäuses, können störende Strömungen vermieden und eine bessere Kühlwirkung erzielt werden. Eine Kaltseite der Kühlvorrichtung, welche insbesondere den Verdampfer umfasst, ist somit innerhalb des Gehäuses angeordnet, wohingegen eine Warmseite der Kühlvorrichtung, welche insbesondere den Kompressor umfasst, außerhalb des Gehäuses, insbesondere im Anbauelement, angeordnet ist.

Vorzugsweise ist unterhalb des Verdampfers ein Kondensat-Ablauf angeordnet, um am Verdampfer entstehendes Kondensat aufzufangen und aus dem Gehäuse abzuleiten, um dieses vorzugsweise direkt an die Umgebungsluft zu verdampfen. Die Entstehung von Kondensat innerhalb des Systembereichs und/oder des Probenbereichs kann durch die gezielte Ableitung des am Verdampfer entstehenden Kondensats vermieden werden, sodass eine Beeinflussung der Messsysteme, insbesondere der Mess- und Analysemodule, durch Kondensat nahezu ausgeschlossen werden kann. Zudem erfolgt durch die Kühlung des gasförmigen Mediums im Gehäuse am Verdampfer eine Entfeuchtung des Mediums. Insbesondere können Lösungsmitteldämpfe, welche aus dem Probenbereich in den Systembereich gelangt sind, am Verdampfer kondensieren oder im Kondensat gebunden werden und so über den Kondensat-Ablauf aus dem Gehäuse ausgeleitet werden. Durch den Kondensat-Ablauf kann zudem vermieden werden, dass das am Verdampfer entstehende Kondensat auf eine Komponente des Systembereichs und/oder des Probenbereichs tropft oder sich dort niederschlägt, wodurch die Messungen und die Messgenauigkeit negativ beeinflusst wird.

Bevorzugt ist das Gehäuse thermisch gegenüber der Umgebung, insbesondere gegenüber dem Anbauelement, isoliert. Durch die Isolierung des Gehäuses können gleichbleibende Testbedingungen im Gehäuse schneller und besser eingestellt werden und Einflüsse von außerhalb des Gehäuses, wie beispielsweise durch Temperaturschwankungen, vermieden werden. Insbesondere kann durch ein thermisch isoliertes Gehäuse die Bildung von Kondensat an ungewünschten Stellen im Gehäuse, beispielsweise durch Kältebrücken, unterbunden werden.

Insbesondere sollte die relative Feuchtigkeit dauerhaft innerhalb des Gehäuses kleiner 70 % betragen, um die Entstehung von Kondensat an den Komponenten des Mikroplatten-Lesegerätes, insbesondere an den Mess- und/oder Analysemodulen, und hierdurch eine Beeinflussung der Messergebnisse, zu vermeiden.

Durch die zumindest eine Öffnungen, insbesondere durch die Öffnungen zwischen Systembereich und Probenbereich kann während und/oder auch nach durchgeführten Messungen an einer Mikroplatte der Probenbereich gezielt gekühlt werden. Somit können bestimmte thermische Testbedingungen, insbesondere in Verbindung mit der Heizeinrichtung, gezielt eingestellt werden. Zudem ist das Mikroplatten-Lesegerät durch eine Kühlung des eventuell aufgeheizten Probenbereichs nach der Durchführung von Messungen an einer Mikroplatte schneller wieder einsatzbereit, beispielsweise zur Analyse einer weiteren Mikroplatten.

Weitere Vorteile und Eigenschaften der vorliegenden Erfindung ergeben sich aus der nachfolgenden Beschreibung eines Ausführungsbeispiels anhand der Figuren. Es zeigen:
- Figur 1: eine Seitenansicht eines erfindungsgemäßen Mikroplatten-Lesegeräts; und
- Figur 2: eine Draufsicht auf ein erfindungsgemäßes Mikroplatten-Lesegerät mit der Darstellung von Strömungen.

Im Folgenden werden gleiche oder gleichwirkende Teile mit gleichen Bezugszeichen bezeichnet.

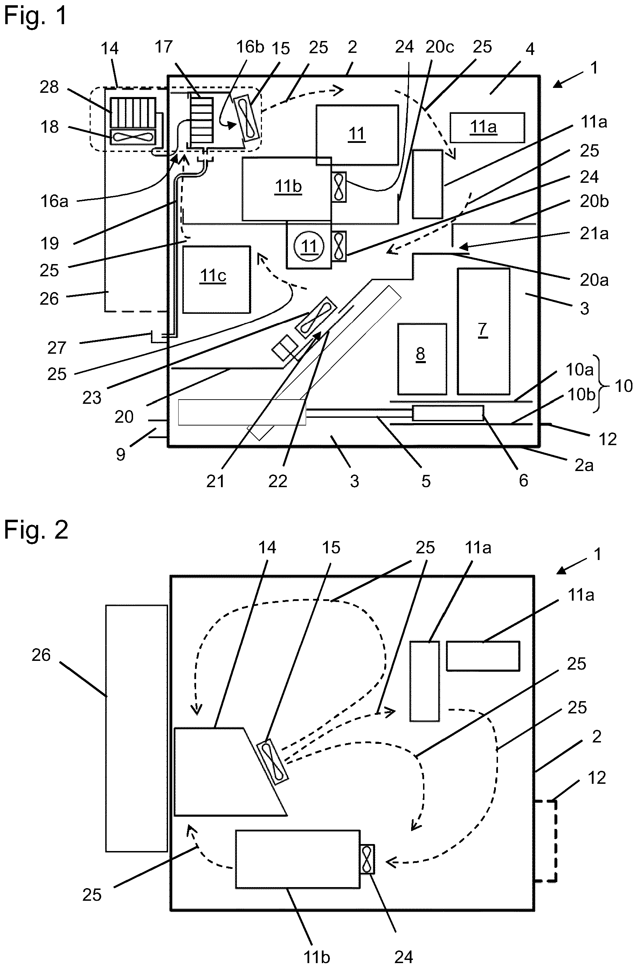

In Figur 1 ist ein erfindungsgemäßes Mikroplatten-Lesegerät 1 in einer seitlichen Schnittansicht dargestellt. Das Mikroplatten-Lesegerät 1 umfasst ein Gehäuse 2, welches das Mikroplatten-Lesegerät 1 im Wesentlichen vollständig umschließt und gegenüber der Umgebung thermisch isoliert ist. In einem unteren Bereich nahe eines Bodens 2a des Gehäuses 2 ist ein Einschub 12 ausgebildet, über welchen mittels einer Aufnahmevorrichtung 5 eine Mikroplatte 6 in einen Probenbereich 3 des Mikroplatten-Lesegerätes 1 eingebracht wird. Nach Einführung der Mikroplatte 6 wird der Einschub 12 im Gehäuse 2 wieder vollständig verschlossen, sodass das Mikroplatten-Lesegerät 1 im Wesentlichen gegenüber der Umgebung abgedichtet ist. Die Mikroplatte 6 selbst weist eine Vielzahl von Vertiefungen auf, in welche die mittels des Mikroplatten-Lesegerätes 1 zu untersuchenden Proben eingebracht sind.

Weiter ist im Probenbereich 3 ein optisches Element 7 angeordnet, mittels welchem die optische Strahlung während der Analyse der einzelnen Proben in den jeweils einzelnen Vertiefungen der Mikroplatte 6 erfasst wird. Bei dem optischen Element handelt es sich vorliegend um ein verstellbares Objektiv, eine Linse, eine Blende und/oder einen Lichtwellenleiter. Alternativ kann das optische Element 7 auch im Systembereich 4 angeordnet sein und die optische Strahlung über einen Durchgang zum optischen Element 7 gelangen. Insbesondere kann das optische Element in diesem Durchgang angeordnet sein. Des Weiteren umfasst der Probenbereich 3 einen Injektor 8, mittels welchem zu den Proben in die Vertiefungen der Mikroplatte 6 bei Bedarf weitere Reagenzien zugeführt werden können.

Im Bereich der Mikroplatte 6 sowie des optischen Elements 7 und des Injektors 8 ist eine Heizeinrichtung 10 angeordnet, mittels derer die Mikroplatte 6 bzw. die in der Mikroplatte 6 in den Vertiefungen ausgebildeten Proben auf eine gewünschte Temperatur aufgeheizt werden können. Die Heizeinrichtung 10 umfasst eine untere Heizplatte 10a und eine obere Heizplatte 10b, welche unterhalb bzw. oberhalb der Mikroplatte 6 angeordnet sind. In der oberen Heizplatte 10b ist eine Durchtrittsöffnung ausgebildet, durch welche die optische Strahlung aus einer Vertiefung der Mikroplatte 6 in Richtung des optischen Elements 7 hindurchtritt. Die Heizeinrichtung 10 ermöglicht zudem, dass sowohl das optische Element 7 als auch der Injektor 8 für eine optimale Funktion zusammen mit der Mikroplatte 6 aufgewärmt werden.

Im Gehäuse 2 ist weiterhin ein Gas-Einlass 9 ausgebildet, über welchen ein gasförmiges Medium, vorliegend Stickstoff, in das Gehäuse 2 des Mikroplatten-Lesegerätes 1 geleitet wird. Mit dem gasförmigen Medium kann das gesamte Gehäuse 2 geflutet werden oder auch ein bestimmtes Mischungsverhältnis, wie z.B. ein (Rest-) Sauerstoffgehalt, sowie zeitliche Veränderungen des Gemischs erreicht werden.

Neben dem Probenbereich 3 umfasst das Mikroplatten-Lesegerät 1 weiter einen Systembereich 4, in welchem mehrere Mess- und/oder Analysemodule 11, 11a, 11b, 11c zur Auswertung der von dem optischen Element 7 erfassten Strahlung angeordnet sind. Mittels der Mess- und/oder Analysemodule 11, 11a, 11b, 11c wird die Lumineszenz, Fluoreszenz und/oder Absorption der Proben in den Vertiefungen der Mikroplatte 6 ermittelt, wodurch die einzelnen Proben entsprechend charakterisiert werden können. Die Mess- und/oder Analysemodule 11, 11a, 11b, 11c umfassen hierbei zwei oder vier Photomultiplier 11a, eine Blitzlampe 11b, eine Lichtquelle 11c sowie weitere Mess- und/oder Analysemodule 11, welche im Systembereich 4 verteilt angeordnet sind.

Im Betrieb benötigen einerseits die Mess- und/oder Analysemodule 11, 11a, insbesondere die Photomultiplier 11a, eine hohe Temperaturstabilität, da diese gekühlt eine höhere Leistungsfähigkeit aufweisen. Anderseits erzeugen die Mess- und/oder Analysemodule 11b, 11c, insbesondere die Blitzlampe 11b sowie die Lichtquelle 11c, auf Grund ihrer Leistung eine entsprechende Wärme, welche die Messgenauigkeiten und Eigenschaften der Mess- und/oder Analysemodule 11, 11a, 11b, 11c, insbesondere die Photomultiplier 11a, negativ beeinflusst. Um diese Wärme abzuführen sowie eine entsprechende gleichbleibende Temperatur zu gewährleisten, ist im Systembereich 4 weiter eine Kühlvorrichtung 14 angeordnet, mittels welcher die Mess- und/oder Analysemodule 11, 11a, 11b, 11c durch konvektive Kühlung gekühlt werden und eine entsprechende Wärmeabfuhr sowie Kühlung von den Mess- und/oder Analysemodulen 11, 11a, 11b, 11c erfolgt. Zusätzlich sind an den Mess- und/oder Analysemodule 11, 11a, 11b, 11c weitere Kühleinrichtungen wie Ventilatoren 24 angeordnet, mittels welchen die entsprechenden Mess- und/oder Analysemodule 11, 11a, 11b, 11c zusätzlich gekühlt werden.

Die Kühlvorrichtung 14 ist innerhalb des Gehäuses 2 des Mikroplatten-Lesegerätes 1 in einem oberen Bereich des Gehäuses 2 angeordnet um eine möglichst effektive Kühlung der Mess- und/oder Analysemodule 11, 11a, 11b, 11c und des Systembereichs 4 zu ermöglichen. Die Kühlvorrichtung 14 selbst umfasst einen Verdampfer 17, welcher innerhalb des Gehäuses 2 angeordnet ist, sowie einen Kondensator 28 und einen Kühlventilator 18, welche außerhalb des Gehäuses 2 angeordnet sind und mit dem Verdampfer 17 für eine entsprechende Kühlung wirkverbunden sind. Der Kondensator 28 sowie der Kühlventilator 18 sind hierbei in einem Anbauelement 26 angeordnet. Durch die Anordnung des Kondensators 28 außerhalb des Gehäuses 2 muss die bei der Komprimierung des Kühlmittels entstehende Wärme nicht aus dem Gehäuse 2 abgeleitet werden, sondern wird an die Umgebungsluft abgeben, wodurch die Kühlleistung im Gehäuse 2 der Kühlvorrichtung 14 weiter verbessert wird.

Unterhalb des Verdampfers 17 ist ein Kondensat-Ablauf 19 ausgebildet, um durch die Kühlung am Verdampfer 17 entstehendes Kondensat unmittelbar abzuleiten. Hierbei wird das am Verdampfer 17 entstehende Kondensat aufgefangen und über den Kondensat-Ablauf 19 aus dem Gehäuse 2 in einen Auffangbehälter 27 ausgeleitet. Hierdurch wird verhindert, dass das entstandene Kondensat sich innerhalb des Gehäuses 2, insbesondere an den Mess- und/oder Analysemodulen 11, 11a, 11b, 11c, niederschlägt was auch einen Einfluss auf die Messergebnisse ausüben kann. Insbesondere sollte die relative Feuchtigkeit dauerhaft innerhalb des Gehäuses 2 kleiner 70 % betragen, um die Entstehung von Kondensat an den Komponenten des Mikroplatten-Lesegerätes 1 und hierdurch eine Beeinflussung der Messergebnisse zu vermeiden. Das im Auffangbehälter 27 aufgefangene Kondensat verdampft unter Umgebungsbedingungen oder wird abgeleitet, beispielsweise durch Entfernen und Leeren des Auffangbehälters 27.

Mittels eines Strömungsventilator 15 wird eine Strömung 25 der konvektiven Kühlung innerhalb des Systembereichs 4 zusätzlich unterstützt. Der Strömungsventilator 15 ist vor einem Auslass 16b der Kühlvorrichtung 14 angeordnet. Weiter weist die Kühlvorrichtung 14 einen Einlass 16a, über welchen das im Gehäuse 2 befindliche Medium angesaugt, am Verdampfer 17 gekühlt und schließlich am Auslass 16b wieder ausgegeben wird. Der Einlass 16a wie auch der Auslass 16b sind so angeordnet, dass die durch den Einlass 16a bzw. Auslass 16b verlaufenden Ebenen einen Winkel von ca. 80° zueinander einschließen.

Die Anordnung von Einlass 16a und Auslass 16b in Verbindung mit dem Strömungsventilator 15 ermöglicht es, dass die Strömung 25 im Systembereich 4 in einem Kreislauf geführt wird. Die Mess- und/oder Analysemodule 11, 11a, 11b, 11c sind in diesem Kreislauf so angeordnet, dass die Mess- und/oder Analysemodule 11, 11a, 11b, 11c, welche eine hohe Leistung aufweisen, eine hohe Temperaturstabilität benötigen und/oder gekühlt eine höhere Leistungsfähigkeit aufweisen, zuerst und somit näher am Auslass 16b der Kühlvorrichtung 14 angeordnet sind.

Für eine hohe Kühlleistung können die entsprechenden Mess- und/oder Analysemodule 11, 11a, 11b, 11c auch unmittelbar von der Strömung 25 angeströmt werden, wodurch eine effektive Kühlung erreicht wird. Wie beispielsweise in Figur 2 dargestellt, werden die Photomultiplier 11a, welche eine hohe Temperaturstabilität benötigen und gekühlt eine höhere Leistungsfähigkeit aufweisen, direkt von der Strömung 25 angeströmt, wodurch eine entsprechende Kühlung der Photomultiplier 11a erzielt wird. Die Blitzlampe 11b, welche eine entsprechende Wärme erzeugt, ist in unmittelbarer Nähe zur Kühleinrichtung 14 angeordnet, jedoch in der Höhe etwas näher am Boden 2a des Gehäuses 2. Die von der Blitzlampe 11b aufsteigende Wärme wird unmittelbar von der zum Einlass 16a verlaufenden Strömung 25 erfasst und entsprechend abgeführt.

Die Kühlvorrichtung 14 sowie der Strömungsventilator 15 sind, wie in Figur 2 dargestellt, innerhalb des Gehäuses 2 so ausgebildet und ausgerichtet, dass eine entsprechende Strömung 25 ausgebildet wird und bestimmte Mess- und/oder Analysemodule 11, 11a, 11b, 11c entsprechend angeströmt werden.

Zur Leitung der Strömung 25 im Systembereich 4 sind innerhalb des Gehäuses 2 zwischen dem Systembereich 4 und dem Probenbereich 3 Leitbleche 20, 20a, 20b angeordnet. Die Leitbleche 20, 20a, 20b überdecken den Probenbereich 3 im Wesentlichen vollständig und weisen neben einem Durchlass für die von dem optischen Element 7 erfasste optische Strahlung Öffnungen 21, 21a auf, über welche der Probenbereich 3 mit dem Systembereich 4 fluidisch verbunden ist. Durch die fluidische Verbindung des Systembereichs 4 und des Probenbereichs 3 über die Öffnungen 21, 21a sind diese nicht voneinander hermetisch abgetrennt.

Die Öffnungen 21, 21a weisen eine Öffnungsfläche von ca. 35 cm² auf, wobei die Öffnungen 21, 21a in unterschiedlichen Höhen über dem Boden 2a des Gehäuses 2 ausgebildet sind. Vor der Öffnung 21 ist ein Verschlussmittel 22 angeordnet, mittels welchem die Öffnungsfläche der Öffnung 21 verändert und auch vollständig abgedeckt werden kann.

Das Verschlussmittel 22 ist über eine nicht näher dargestellte Steuereinrichtung steuerbar, so dass durch das Verschlussmittel 22 die Öffnungsfläche der Öffnung 21 zwischen Probenbereich 3 und Systembereich 4 einstellbar ist. Bei einer Aktivität der Heizeinrichtung 10 kann somit die Öffnung 21 beispielsweise verdeckt werden, sodass der Probenbereich 3 im Wesentlichen gegenüber dem Systembereich 4 abgetrennt ist und eine Erwärmung des Probenbereichs ermöglicht wird . Zudem wird durch die Anordnung der Leitbleche 20, 20a, 20b sowie der Öffnung 21, 21a im Probenbereich 3 eine Art Wärmefalle ausgebildet, welche einerseits ein Aufsteigen eines im Probenbereich 3 erwärmten gasförmigen Mediums abbremst und gleichzeitig ein Nachströmen aus dem Systembereich und somit eines gekühlten gasförmigen Mediums ermöglicht.

Sofern eine Kühlung des Probenbereichs 3 gewünscht ist, kann die Öffnung 21 durch Bewegung des Verschlussmittels 22 freigegeben werden, wodurch ein konvektiver Austausch mit dem Systembereich 4 erfolgt. Mittels eines vor der Öffnung 21 im Systembereich 4 angeordneten Lüfters 23, welcher als Radiallüfter ausgebildet ist, kann die Kühlung des Probenbereichs 3 beschleunigt werden, indem mittels des Lüfters 23 das erwärmte Medium im Probenbereich 3 in den Systembereich 4 eingesogen wird. Über die Öffnung 21a strömt das gasförmige Medium im Gehäuse 2 in den Probenbereich 3 nach, welches der Strömung 25 der konvektiven Kühlung entstammt. Alternativ kann der Lüfter 23 auch eine gekühlte Strömung in den Probenbereich 3 aus dem Systembereich 4 leiten. Somit wird mittels der im Systembereich 4 angeordneten Kühlvorrichtung 14 nicht nur eine Kühlung der im Systembereich 4 angeordneten Mess- und/oder Analysemodule 11, 11a, 11b, 11c ermöglicht, sondern gleichzeitig eine Kühlung des Probenbereichs 3 ermöglicht, insbesondere mittels einer konvektiven Kühlung oder einer durch den Lüfter 23 erzwungenen aktiven Kühlung.

Durch die Öffnungen 21, 21a wird somit eine Kühlung des Probenbereichs 3 ermöglicht, insbesondere auch eine Kühlung unterhalb der Raumtemperatur, wobei die zu erreichenden thermischen Bedingungen von der Kühlvorrichtung abhängen. Weiter ermöglicht beispielsweise eine Einstellung einer Drehzahl des Lüfters 23 eine gezielte Beeinflussung der konvektiven Kühlung in den Probenbereich 3, sodass dort entsprechende thermische Bedingungen eingestellt werden können.

Die Leitelemente 20, 20a, 20b sind vorliegend als Bleche ausgebildet, können jedoch auch aus einem anderen Werkstoff erstellt sein. Daneben können noch weitere Leitelemente 20c im Systembereich 4 angeordnet sein, mittels welchen die Strömung 25 im Systembereich 4, insbesondere zwischen den Mess- und/oder Analysemodule 11, 11a, 11b, 11c weiter beeinflusst und geleitet wird.

### Bezugszeichenliste

- 1: Mikroplatten-Lesegerät
- 2: Gehäuse
- 2a: Boden
- 3: Probenbereich
- 4: Systembereich
- 5: Aufnahmevorrichtung
- 6: Mikroplatte
- 7: optisches Element
- 8: Injektor
- 9: Gas-Einlass
- 10: Heizeinrichtung
- 10a, 10b: Heizplatte
- 11, 11a, 11b, 11c: Mess- und Analysemodul
- 12: Einschub
- 1314: Kühlvorrichtung
- 15: Strömungsventilator
- 16a: Einlass
- 16b: Auslass
- 17: Verdampfer
- 18: Kühlventilator
- 19: Kondensat-Ablauf
- 20, 20a, 20b, 20c: Leitelement
- 21, 21a: Öffnung
- 22: Verschlussmittel
- 23: Lüfter
- 24: Ventilator
- 25: Strömung
- 26: Anbauelement
- 27: Auffangbehälter
- 28: Kondensator

## Patentansprüche

1. Mikroplatten-Lesegerät (1), welches ein Gehäuse (2) umfasst, in dessen Innerem ein Probenbereich (3) und ein Systembereich (4) ausgebildet sind, wobei der Probenbereich (3) eine Aufnahmevorrichtung (5) zur Aufnahme einer Mikroplatte (6) aufweist, die eine Vielzahl von Vertiefungen aufweist, wobei im Probenbereich (3) und/oder im Systembereich (4) ein optisches Element (7) zur Erfassung einer optischen Strahlung an jeweils einzelnen der Vertiefungen einer in der Aufnahmevorrichtung (5) aufgenommenen Mikroplatte (6) angeordnet ist, wobei die Aufnahmevorrichtung (5) und das optische Element (7) beweglich zueinander angeordnet sind, um die aufgenommene Mikroplatte (6) bezüglich des optischen Elements (7) für aufeinanderfolgende Messungen an unterschiedlichen Vertiefungen zu positionieren, wobei der Systembereich (4) zumindest ein Mess- und/oder Analysemodul (11, 11a, 11b, 11c) für die optische Strahlung umfasst,
wobei im Systembereich (4) eine Kühlvorrichtung (14) zur konvektiven Kühlung angeordnet ist, wobei zwischen dem Systembereich (4) und dem Probenbereich (3) zumindest ein Leitelement (20, 20a, 20b) angeordnet ist, um eine Strömung (25) der konvektiven Kühlung, insbesondere im Systembereich (4), zu leiten, **dadurch gekennzeichnet, dass** das Leitelement (20, 20a, 20b) zumindest eine Öffnung (21, 21a) zum Probenbereich (3) aufweist und/oder so angeordnet ist, um mit einer Komponente des Mikroplatten-Lesegerätes (1) eine Öffnung (21, 21a) auszubilden, und/oder dass mehrere Leitelemente (20, 20a, 20b) abschnittsweise so angeordnet sind, um zwischen dem Systembereich (4) und dem Probenbereich (3) zumindest eine Öffnung (21, 21a) auszubilden, so dass mittels der Kühlvorrichtung (14) sowohl der Probenbereich (3) als auch der Systembereich (4) gekühlt werden können.

2. Mikroplatten-Lesegerät (1) nach Anspruch 1, **dadurch gekennzeichnet, dass** im Probenbereich (3) eine Heizeinrichtung (10) zum Beheizen der Mikroplatte (6) und insbesondere des optischen Elements (7) angeordnet ist.

3. Mikroplatten-Lesegerät (1) nach einem der vorhergehenden Ansprüche,
**dadurch gekennzeichnet,**
**dass** das Leitelement (20, 20a, 20b) oder mehrere Leitelemente (20, 20a, 20b) zusammen den Probenbereich (3) im Wesentlichen überdecken.

4. Mikroplatten-Lesegerät (1) nach einem der vorhergehenden Ansprüche,
**dadurch gekennzeichnet,**
**dass** das Mikroplatten-Lesegerät (1) ein Verschlussmittel (22), beispielsweise einen Schieber oder eine Klappe, umfasst, mit dem eine Öffnungsfläche der zumindest einen Öffnung (21, 21a) veränderbar und insbesondere verschließbar ist.

5. Mikroplatten-Lesegerät (1) nach einem der vorhergehenden Ansprüche,
**dadurch gekennzeichnet,**
**dass** die Öffnungsfläche bis zu 100 cm², bevorzugt bis zu 60 cm², besonders bevorzugt bis zu 40 cm², insbesondere 35 cm² beträgt.

6. Mikroplatten-Lesegerät (1) nach einem der vorhergehenden Ansprüche,
**dadurch gekennzeichnet,**
**dass** im Bereich der zumindest einen Öffnung (21, 21a) ein Lüfter (23), insbesondere ein Radiallüfter, angeordnet ist.

7. Mikroplatten-Lesegerät (1) nach einem der vorhergehenden Ansprüche,
**dadurch gekennzeichnet,**
**dass** das zumindest eine Leitelement (20, 20a, 20b) zumindest zwei Öffnungen (21, 21a) zum Probenbereich (3) aufweist oder ausbildet, welche bevorzugt in unterschiedlichen Höhen über einem Boden (2a) des Gehäuses (2) ausgebildet sind.

8. Mikroplatten-Lesegerät (1) nach einem der vorhergehenden Ansprüche,
**dadurch gekennzeichnet,**
**dass** die Kühlvorrichtung (14) einen Strömungsventilator (15) umfasst.

9. Mikroplatten-Lesegerät (1) nach einem der vorhergehenden Ansprüche,
**dadurch gekennzeichnet,**
**dass** die Kühlvorrichtung (14) im Systembereich (4) derart platziert ist, um die Strömung (25) der konvektiven Kühlung als einen Kreislauf, insbesondere im Systembereich (4), auszubilden.

10. Mikroplatten-Lesegerät (1) nach Anspruch 9, **dadurch gekennzeichnet,**
**dass** die Kühlvorrichtung (14) einen Auslass (16b) und einen Einlass (16a) aufweist, welche vorzugsweise so angeordnet sind, dass eine von der Kühlvorrichtung (14) ausgehende gekühlte Strömung (25) des Kreislaufs zu einer in die Kühlvorrichtung (14) eingehende erwärmten Strömung (25) des Kreislaufs einen Winkel in einem Bereich von 60° bis 120°, bevorzugt von etwa 90° zueinander bilden.

11. Mikroplatten-Lesegerät (1) nach einem der vorhergehenden Ansprüche 9 oder 10, **dadurch gekennzeichnet,**
**dass** das oder die Mess- und/oder Analysemodule (11, 11a, 11b, 11c), welche eine hohe Leistung aufweisen und/oder eine hohe Temperaturstabilität benötigen und/oder gekühlt eine höhere Leistungsfähigkeit aufweisen, im Kreislauf zuerst angeordnet sind und/oder so angeordnet sind, um von der gekühlten Strömung (25) unmittelbar angeströmt zu werden.

12. Mikroplatten-Lesegerät (1) nach einem der vorhergehenden Ansprüche,
**dadurch gekennzeichnet,**
**dass** die Kühlvorrichtung (14) einen Verdampfer (17), einen Kondensator (28) und vorzugsweise einen Kühlventilator (18) umfasst, wobei vorzugsweise der Verdampfer im Gehäuse (2) und der Kondensator (28) außerhalb des Gehäuses (2), insbesondere am Gehäuse (2), angeordnet sind.

13. Mikroplatten-Lesegerät (1) nach Anspruch 12, **dadurch gekennzeichnet,**
**dass** unterhalb des Verdampfers (17) ein Kondensat-Ablauf (19) angeordnet ist, um am Verdampfer (17) entstehendes Kondensat aus dem Gehäuse (2) abzuleiten, um dieses vorzugsweise direkt an die Umgebungsluft zu verdampfen.

14. Mikroplatten-Lesegerät (1) nach einem der vorhergehenden Ansprüche,
**dadurch gekennzeichnet,**
**dass** das Gehäuse (2) einen Gas-Einlass (9) aufweist, über welchen das Gehäuse (2), insbesondere der Probenbereich (3) und der Systembereich (4), vollständig mit einem gasförmigen Medium geflutet wird und/oder dass das Gehäuse (2) thermisch isoliert ist.

## Claims

1. A microplate reader (1), which comprises a housing (2), in the interior of which a sample region (3) and a system region (4) are formed, wherein the sample region (3) has a receiving device (5) for receiving a microplate (6), which has a plurality of wells, wherein an optical element (7) is arranged in the sample region (3) and/or in the system region (4) for detecting an optical radiation at respective ones of the wells of a microplate (6) received in the receiving device (5), wherein the receiving device (5) and the optical element (7) are arranged to be movable relative to one another in order to position the received microplate (6) relative to the optical element (7) for successive measurements at different wells, wherein the system region (4) comprises at least one measuring and/or analysis module (11, 11a, 11b, 11c) for the optical radiation, wherein a cooling device (14) for convective cooling is arranged in the system region (4), wherein at least one guide element (20, 20a, 20b) is arranged between the system region (4) and the sample region (3) to guide a flow (25) of the convective cooling, in particular in the system region (4), **characterized in that** the guide element (20, 20a, 20b) has at least one opening (21, 21a) to the sample region (3) and/or is arranged to form together with a component of the microplate reader (1) an opening (21, 21a), and/or **characterized in that** several guide elements (20, 20a, 20b) are arranged in sections to form at least one opening (21, 21a) between the system region (4) and the sample region (3), so that both the sample region (3) and the system region (4) can be cooled by means of the cooling device (14).

2. Microplate reader (1) according to claim 1, **characterized in that**
a heating apparatus (10) for heating the microplate (6) and in particular the optical element (7) is arranged in the sample region (3).

3. Microplate reader (1) according to any one of the preceding claims, **characterized in that**
the guide element (20, 20a, 20b) or several guide elements (20, 20a, 20b) together essentially cover the sample region (3).

4. Microplate reader (1) according to any one of the preceding claims, **characterized in that**
the microplate reader (1) comprises a closure means (22), for example a slide or a flap, with which an opening area of the at least one opening (21, 21a) is changeable and in particular closable.

5. Microplate reader (1) according to any one of the preceding claims, **characterized in that**
the opening area is up to 100 cm², preferably up to 60 cm², most preferably up to 40 cm², in particular 35 cm².

6. Microplate reader (1) according to any one of the preceding claims, **characterized in that**
a fan (23), in particular a radial fan, is arranged in the region of the at least one opening (21, 21a).

7. Microplate reader (1) according to any one of the preceding claims, **characterized in that**
the at least one guide element (20, 20a, 20b) has or forms at least two openings (21, 21a) to the sample region (3), which are preferably formed at different heights above a base (2a) of the housing (2).

8. Microplate reader (1) according to any one of the preceding claims, **characterized in that**
the cooling device (14) comprises a flow ventilator (15).

9. Microplate reader (1) according to any one of the preceding claims, **characterized in that**
the cooling device (14) is placed in the system region (4) in such a way as to form the flow (25) of the convective cooling as a circuit, in particular in the system region (4).

10. Microplate reader (1) according to claim 9, **characterized in that**
the cooling device (14) has an outlet (16b) and an inlet (16a), which are preferably arranged so that a cooled flow (25) of the circuit emanating from the cooling device (14) and a heated flow (25) of the circuit entering the cooling device (14) form an angle in a range of 60° to 120°, preferably of about 90° with respect to one another.

11. Microplate reader (1) according to any one of the preceding claims 9 or 10, **characterized in that**
the measuring and/or analysis module(s) (11, 11a, 11b, 11c), which have a high performance and/or require a high temperature stability and/or have a higher performance capability when cooled, are arranged first in the circuit and/or are arranged in order to be immediately flowed against by the cooled flow (25).

12. Microplate reader (1) according to any one of the preceding claims, **characterized in that**
the cooling device (14) comprises an evaporator (17), a condenser (28) and preferably a cooling ventilator (18), wherein the evaporator is preferably arranged in the housing (2) and the condenser (28) is arranged outside the housing (2), in particular on the housing (2).

13. Microplate reader (1) according to claim 12, **characterized in that**
a condensate drain (19) is arranged below the evaporator (17) in order to drain condensate developing on the evaporator (17) out of the housing (2) in order to evaporate it preferably directly into the ambient air.

14. Microplate reader (1) according to any one of the preceding claims, **characterized in that**
the housing (2) has a gas inlet (9) via which the housing (2), in particular the sample region (3) and the system region (4), is completely flooded with a gaseous medium and/or **characterized in that** the housing (2) is thermally insulated.

## Revendications

1. Lecteur de microplaques (1) qui comprend un boîtier (2) à l'intérieur duquel une zone d'échantillon (3) et une zone de système (4) sont formées, dans lequel la zone d'échantillon (3) présente un dispositif de logement (5) pour loger une microplaque (6) qui présente une pluralité d'évidements, dans lequel un élément optique (7) est disposé dans la zone d'échantillon (3) et/ou dans la zone de système (4) pour détecter un rayonnement optique au niveau respectivement des évidements individuels d'une microplaque (6) logée dans le dispositif de logement (5), dans lequel le dispositif de logement (5) et l'élément optique (7) sont disposés de manière mobile l'un par rapport à l'autre pour positionner la microplaque logée (6) par rapport à l'élément optique (7) pour des mesures successives au niveau de différents évidements, dans lequel la zone de système (4) comprend au moins un module de mesure et/ou d'analyse (11, 11a, 11b, 11c) pour le rayonnement optique, dans lequel un dispositif de refroidissement (14) pour le refroidissement par convection est disposé dans la zone de système (4), dans lequel au moins un élément de guidage (20, 20a, 20b) est disposé entre la zone de système (4) et la zone d'échantillon (3) pour guider un flux (25) du refroidissement par convection, en particulier dans la zone de système (4), **caractérisé en ce que** l'élément de guidage (20, 20a, 20b) présente au moins une ouverture (21, 21a) vers la zone d'échantillon (3) et/ou est disposé de manière à former une ouverture (21, 21a) avec un composant du lecteur de microplaques (1), et/ou **en ce que** plusieurs éléments de guidage (20, 20a, 20b) sont disposés par sections de manière à former au moins une ouverture (21, 21a) entre la zone de système (4) et la zone d'échantillon (3), de sorte qu'aussi bien la zone d'échantillon (3) que la zone de système (4) puissent être refroidies au moyen du dispositif de refroidissement (14).

2. Lecteur de microplaques (1) selon la revendication 1, **caractérisé en ce que**
un appareil de chauffage (10) est disposé dans la zone d'échantillon (3) pour chauffer la microplaque (6) et en particulier l'élément optique (7).

3. Lecteur de microplaques (1) selon l'une quelconque des revendications précédentes, **caractérisé en ce que**
l'élément de guidage (20, 20a, 20b) ou plusieurs éléments de guidage (20, 20a, 20b) ensemble recouvrent sensiblement la zone d'échantillon (3).

4. Lecteur de microplaques (1) selon l'une quelconque des revendications précédentes, **caractérisé en ce que**
le lecteur de microplaques (1) comprend un moyen de fermeture (22), par exemple un tiroir ou un clapet, avec lequel une surface d'ouverture de la au moins une ouverture (21, 21a) peut être modifiée et en particulier fermée.

5. Lecteur de microplaques (1) selon l'une quelconque des revendications précédentes, **caractérisé en ce que**
la surface d'ouverture s'élève jusqu'à 100 cm², de préférence jusqu'à 60 cm², le plus préférentiellement jusqu'à 40 cm², en particulier 35 cm².

6. Lecteur de microplaques (1) selon l'une quelconque des revendications précédentes, **caractérisé en ce que**
un ventilateur (23), en particulier un ventilateur radial, est disposé dans la zone de la au moins une ouverture (21, 21a).

7. Lecteur de microplaques (1) selon l'une quelconque des revendications précédentes, **caractérisé en ce que**
le au moins un élément de guidage (20, 20a, 20b) présente ou forme au moins deux ouvertures (21, 21a) vers la zone d'échantillon (3), lesquelles sont de préférence formées à des hauteurs différentes au-dessus d'un fond (2a) du boîtier (2).

8. Lecteur de microplaques (1) selon l'une quelconque des revendications précédentes, **caractérisé en ce que**
le dispositif de refroidissement (14) comprend un ventilateur de flux (15).

9. Lecteur de microplaques (1) selon l'une quelconque des revendications précédentes, **caractérisé en ce que**
le dispositif de refroidissement (14) est placé dans la zone de système (4) de telle manière à former le flux (25) du refroidissement par convection en tant que circuit, en particulier dans la zone de système (4).

10. Lecteur de microplaques (1) selon la revendication 9, **caractérisé en ce que**
le dispositif de refroidissement (14) présente une sortie (16b) et une entrée (16a) qui sont de préférence disposées de sorte qu'un flux refroidi (25) du circuit sortant du dispositif de refroidissement (14) et un flux chauffé (25) du circuit entrant dans le dispositif de refroidissement (14) forment entre eux un angle dans une plage de 60° à 120°, de préférence d'environ 90°.

11. Lecteur de microplaques (1) selon l'une quelconque des revendications précédentes 9 ou 10, **caractérisé en ce que**
le ou les modules de mesure et/ou d'analyse (11, 11a, 11b, 11c) qui présentent une puissance élevée et/ou nécessitent une stabilité de température élevée et/ou présentent une capacité de performance supérieure lorsqu'ils sont refroidis, sont disposés d'abord dans le circuit et/ou sont disposés de manière à être directement alimentés par le flux refroidi (25).

12. Lecteur de microplaques (1) selon l'une quelconque des revendications précédentes, **caractérisé en ce que**
le dispositif de refroidissement (14) comprend un évaporateur (17), un condenseur (28) et de préférence un ventilateur de refroidissement (18), dans lequel l'évaporateur est de préférence disposé dans le boîtier (2) et le condenseur (28) est disposé à l'extérieur du boîtier (2), en particulier au niveau du boîtier (2).

13. Lecteur de microplaques (1) selon la revendication 12, **caractérisé en ce que**
une évacuation de condensat (19) est disposée sous l'évaporateur (17) pour évacuer du boîtier (2) le condensat qui se forme au niveau de l'évaporateur (17) pour l'évaporer de préférence directement dans l'air ambiant.

14. Lecteur de microplaques (1) selon l'une quelconque des revendications précédentes, **caractérisé en ce que**
le boîtier (2) présente une entrée de gaz (9) par laquelle le boîtier (2), en particulier la zone d'échantillon (3) et la zone de système (4), est entièrement inondé par un milieu gazeux et/ou **en ce que** le boîtier (2) est isolé thermiquement.
